# EUROPÄISCHE PATENTSCHRIFT

(11) **EP 0 919 075 B1**
(45) Veröffentlichungstag und Bekanntmachung des Hinweises auf die Patenterteilung: **15.03.2000**
(21) Anmeldenummer: 97937441.0
(22) Anmeldetag: 06.08.1997
(51) Int. Cl.: H02B 11/12, H02B 11/167

(54) **LEISTUNGSSCHALTANLAGE MIT TRENNFUNKTIONEN**
POWER SWITCH INSTALLATION WITH DISCONNECTING FUNCTIONS
INSTALLATION D'INTERRUPTION D'ALIMENTATION AVEC FONCTIONS DE DISJONCTION

(30) Priorität: 09.08.1996 DE 19633522
(43) Veröffentlichungstag der Anmeldung: 02.06.1999
(73) Patentinhaber: SIEMENS AKTIENGESELLSCHAFT, 80333 München (DE)
(72) Erfinder: AUGSBURG, Lothar, D-12105 Berlin (DE); BÖTTCHER, Martin, D-10587 Berlin (DE); FREUNDT, Karsten, D-13591 Berlin (DE); KRYSIAK, Jürgen, D-14169 Berlin (DE)
(86) Internationale Anmeldenummer: DE9701695
(87) Internationale Veröffentlichungsnummer: WO9807222

(56) Entgegenhaltungen:
- EP-A- 0 086 734
- DE-U- 8 631 173
- US-A- 2 611 838
- US-A- 3 967 163
- US-A- 5 481 075

## Beschreibung

Die Erfindung betrifft eine Leistungsschaltanlage mit Leistungsschalter, insbesondere luftisolierte Mittelspannungs-Schaltanlage mit in einem Trenneinschub angeordneten Vakuum-Leistungsschalter, wobei der Leistungsschalter eine Poleinheit und einen Schalterantrieb enthält und die Trennfunktion durch Verfahren des kompletten Leistungsschalters bzw. durch Drehen der Poleinheit gegenüber dem Schalterantrieb oder durch einen separaten Trennschalter erfolgt.

Zur Realisierung der Funktion "Lastschalten" und "Lasttrennen" der eingangs definierten Leistungsschaltanlage wurden bisher entweder ein Leistungsschalter mit einem in Reihe geschalteten Trennschalter eingesetzt, oder der Leistungsschalter durch Verfahren in die Trennstellung gebracht, oder durch Drehen der Poleinheit insgesamt das Auftrennen der Laststromkreise ermöglicht. Im erstgenannten Fall wird zusätzlich zum Lastschalter noch ein Trennschalter benötigt, während im zweiten Fall der komplette Leistungsschalter als verfahrbare kompakte Schalteinheit konzipiert ist und im dritten Fall die Poleinheit des Leistungsschalters als ein vom Schalterantrieb separates Drehteil ausgeführt ist. Zur Realisierung derartiger Leistungsschaltanlagen werden also Leistungsschalter mit unterschiedlichsten Bauformen eingesetzt, die, Abhängig von der jeweiligen räumlichen Lage der Schnittstellen, innerhalb der Leistungsschaltanlagen stets angepaßt werden müssen. Dies trifft sowohl für die Schaltkontakte der Leistungsschalter als auch für die von außen her bedienbaren Steuerelemente der Leistungsschaltanlage, wie beispielsweise Tasten, zu.

Durch die Druckschrift US-A-5,481,075 ist ebenfalls eine Leistungsschaltanlage mit Leistungsschaltern bekannt. Allerdings wird hier die Trennfunktion nicht durch Verfahren des kompletten Leistungsschalters erreicht, sondern durch internes Öffnen der Kontakte in der Leistungsschaltanlage. Das Öffnen und Schließen der Kontakte erfolgt außerdem kraftlos ohne Schalterantrieb.

Die der Erfindung zugrunde liegende Aufgabe besteht darin, eine Leistungsschaltanlage zu definieren, bei der die Realisierung der Trennfunktion innerhalb derselben in einfacher Weise und weitestgehend Unabhängig von der jeweiligen Bauform des verwendeten Leistungsschalters erfolgen kann, wobei jedoch die üblichen Schaltfunktionen und der in dieser Technik übliche Sicherheitsstandard unverändert beizubehalten sind. Erfindungsgemäß wird dies durch die Merkmale
- 1.1: die Poleinheit des Leistungsschalters ist durch ein gegenüber dem Schalterantrieb separates Polmodul realisiert,
- 1.2: das Polmodul ist gegenüber dem Schalterantrieb ortsveränderbar angeordnet,
- 1.3: das Polmodul ist mit dem Schalterantrieb durch ein Kraftübertragungsmodul verbunden,
- 1.4: das Polmodul ist mit Einfahrkontakten ausgestattet, die durch das Einwirken des Kraftübertragungsmoduls in kombinierter Linearbewegung horizontal und vertikal verschiebbar sind und in der Betriebsstellung in Eingriff mit entsprechenden Festkontakten der Lastschaltanlage stehen, erreicht.

Durch die kombinierte Linearbewegung des Polmoduls, die zum Verbinden der Einfahrkontakte mit den Festkontakten mindestens bei der Erstinbetriebnahme der Leistungsschalltanlage von dem Kraftübertragungsmodul in horizontaler und vertikaler Richtung gesteuert wird, sind die unterschiedlichen Schnittstellen bzw. die verschiedenen Ebenen der verfahrbaren Einfahrkontakte in sehr einfacher Weise an die Lage der Festkontakte innerhalb der Leistungsschaltanlage anzupassen. Dies bedeutet also, daß das Polmodul gegenüber dem ortsfest angeordneten Schalterantrieb mindestens in gewissen Grenzen frei positionierbar ist.

Die freie Positionierbarkeit des Polmoduls ist gemäß einer vorteilhaften Ausgestaltung der Erfindung durch das Merkmal
- 2.1: das Kraftübertragungsmodul ist durch ein Hebelgelenkgetriebe realisiert, das die Drehbewegung seines Hebelgelenks als annähernd gleichförmige Linearbewegung auf das Polmodul überträgt.

Eine weitere vorteilhafte Ausgestaltung der Erfindung sieht das Merkmal
- 3.1: der Schalterantrieb ist integraler Bestandteil einer Einfahrkassette,
vor. Die Einfahrkassette bildet also mit dem Schalterantrieb eine Funktionseinheit, und trägt dadurch wesentlich zur kompakten Ausgestaltung der Leistungsschaltanlage bei.

Eine weitere vorteilhafte Ausgestaltung der Erfindung sieht das Merkmal
- 4.1: der Schalterantrieb ist auf der Einfahrkassette ortsfest angeordnet, vor.
Damit ist auch die Möglichkeit geschaffen ist, die Trennfunktion direkt in den Leistungsschalter zu integrieren, indem die Poleinheit gegenüber dem in der Leistungsschaltanlage ortsfest angeordneten Schalterantrieb direkt mit der Einfahrkassette verschoben werden kann.

Gemäß einer weiteren vorteilhaften Ausgestaltung der Erfindung ist das Merkmal
- 5.1: das Polmodul ist in der Betriebsstellung und/oder der Trennstellung der Leistungsschaltanlage auf der Einfahrkassette absenkbar,
vorgesehen. Damit ist, insbesondere beim gänzlichen Herausfahren der Einfahrkassette aus der Leistungsschaltanlage, eine totale Entlastung des Kraftübertragungsmoduls und damit auch des Schalterantriebes gegeben.

Die Erfindung wird durch zwei Figuren näher erläutert, wobei die
- Figur 1: die Leistungsschaltanlage in der Trennstellung zeigt, während die
- Figur 2: die Leistungsschaltanlage im Betriebszustand mit geschlossenen Schaltkontakten abbildet.
In beiden Figuren sind jedoch nur die zum Verständnis der Erfindung notwendigen Funktionselemente schematisch dargestellt.

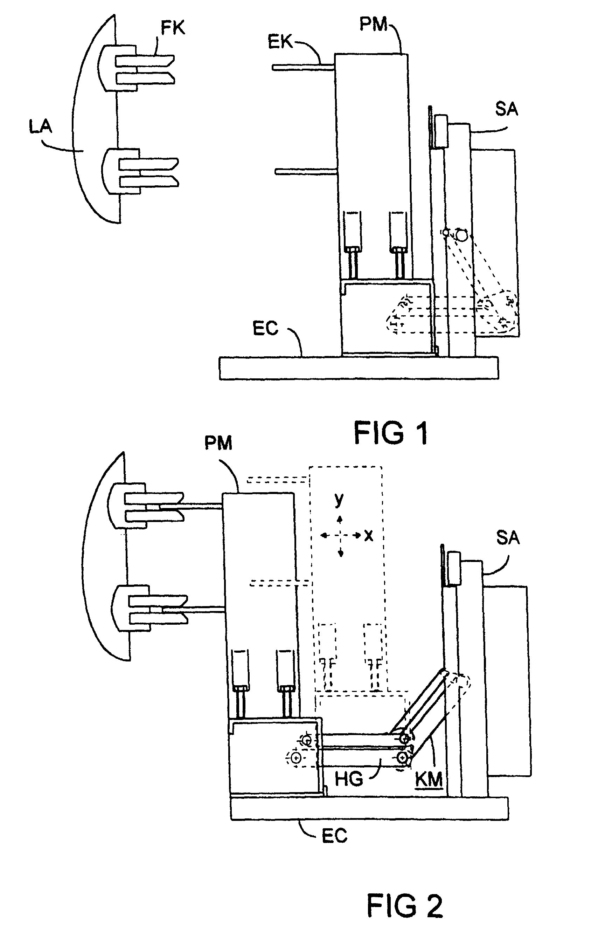

Die Figur 1 zeigt die Leistungsschaltanlage LA mit ihren Festkontakten FK, in die die Einfahrkontakte EK des Polmoduls PM einfahrbar sind (Fig.2). Weiterhin ist ersichtlich, daß das Polmodul PM mit dem Schalterantrieb SA gemeinsam auf der Einfahrkassette EC angeordnet sind. Das Polmodul PM wird von dem Schalterantrieb SA durch das in dieser Figur nicht sichtbare und dementsprechend nur durch die unterbrochenen Linien angedeutete Kraftübertragungsmodul KM (Fig.2) verfahren. Die Figur 2 zeigt die Leistungsschaltanlage LA im Betriebszustand, in dem die Festkontakte FK (Fig.1) mit den Einfahrkontakten EK (Fig.1) elektrisch leitend verbunden sind. Das Polmodul PM ist dabei durch Einwirken des Kraftübertragungsmoduls KM mit dem Hebelgelenkgetriebe HG von dem Schaltantrieb SA derart wegbewegt, daß die Ebene der Einfahrkontakte mit der Ebene der Festkontakte der Leistungsschaltanlage LA in Übereinstimmung gebracht ist. Dieser Bewegungsablauf kann, bedingt durch das Hebelgelenkgetriebe, innerhalb einer Ebene in zwei Freiheitsgraden X, Y erfolgen. Damit ist in einfacher Weise die Möglichkeit geschaffen, unterschiedliche Leistungsschalter in die Polmodule aufzunehmen und die Kontakt-Anpassung durch entsprechendes Verfahren des Polmoduls PM ohne zusätzlichen konstruktiven Aufwand zu ermöglichen. Die Trennfunktion der Leistungsschaltanlage LA kann auch dadurch realisiert sein, daß die Einfahrkassette EC zusammen mit dem mit dem Schalterantrieb SA, dem Hebelgelenkgetriebe HG und dem Polmodul PM, das durch das Hebelgelenkgetriebe HG entsprechend positioniert ist, aus dem Bereich der Leistungsschaltanlage LA gänzlich herausgefahren werden kann.

In dem Ausführungsbeispiel ist angedeutet, daß das Polmodul PM im Betriebszustand auf der Einfahrkassette EC aufliegt und damit das Hebelgelenkgetriebe HG vollständig entlastet ist.

## Patentansprüche

1. Leistungsschaltanlage (LA) mit Leistungsschalter, insbesondere luftisolierte Mittelspannungs-Schaltanlage mit in einem Trenneinschub angeordneten Vakuum-Leistungsschalter, wobei der Leistungsschalter eine Poleinheit und einen Schalterantrieb (SA) enthält und die Trennfunktion durch Verfahren des kompletten Leistungsschalters bzw. durch Drehen der Poleinheit gegenüber dem Schalterantrieb oder durch einen separaten Trennschalter erfolgt,
**gekennzeichnet durch** die Merkmale
1.1 die Poleinheit des Leistungsschalters ist durch ein gegenüber dem Schalterantrieb (SA) separates Polmodul (PM) realisiert,
1.2 das Polmodul(PM) ist gegenüber dem Schalterantrieb (SA) ortsveränderbar angeordnet,
1.3 das Polmodul (PM) ist mit dem Schalterantrieb (SA) durch ein Kraftübertragungsmodul (KM) verbunden,
1.4 das Polmodul (PM) ist mit Einfahrkontakten (EK) ausgestattet, die durch das Einwirken des Kraftübertragungsmoduls (KM) in kombinierter Linearbewegung horizontal und vertikal verschiebbar sind und in der Betriebsstellung in Eingriff mit entsprechenden Festkontakten (FK) der Leistungsschaltanlage (LA) stehen.

2. Leistungsschaltanlage nach Anspruch 1,
**gekennzeichnet durch** das Merkmal
2.1 das Kraftübertragungsmodul (KM) ist durch ein Hebelgelenkgetriebe (HG) realisiert, das die Drehbewegung seines Hebelgelenks als annähernd gleichförmige Linearbewegung auf das Polmodul (PM) überträgt.

3. Leistungsschaltanlage nach Anspruch 1,
**gekennzeichnet durch** das Merkmal
3.1 der Schalterantrieb (SA) ist integraler Bestandteil einer Einfahrkassette (EC).

4. Leistungsschaltanlage nach Anspruch 3,
gekennzeichnet durch das Merkmal
4.1 der Schalterantrieb (SA) ist auf der Einfahrkassette (EC) ortsfest angeordnet.

5. Leistungsschaltanlage nach Anspruch 1,
**gekennzeichnet durch**
5.1 das Polmodul (PM) ist in der Betriebsstellung und/oder der Trennstellung der Leistungsschaltanlage auf die Einfahrkassette (EC) absenkbar.

## Claims

1. Circuit-breaker system (CS) having a circuit-breaker, in particular an air-insulated medium-voltage switching system with a vacuum circuit-breaker arranged in an isolating insert, the circuit-breaker containing a pole unit and a switch drive (SD) and the isolating function being performed by moving the complete circuit-breaker or by rotating the pole unit with respect to the switch drive or by a separate isolating switch,
characterized by the features:
1.1 the pole unit of the circuit-breaker is implemented by a pole module (PM) which is separate from the switch drive (SD),
1.2 the pole module (PM) is arranged such that its location relative to the switch drive (SD) can be varied,
1.3 the pole module (PM) is connected to the switch drive (SD) via a force transmission module (FM),
1.4 the pole module (PM) is equipped with isolating contacts (IC) which are horizontally and vertically displaceable in a combined linear motion by the action of the force transmission module (FM) and, in the operating position, engage with corresponding fixed contacts (FC) of the circuit-breaker system (CS) .

2. Circuit-breaker system according to Claim 1,
characterized by the feature
2.1 the force transmission module (FM) is implemented by a lever linkage (LL) which transmits the rotary motion of its lever link to the pole module (PM) as an approximately uniform linear motion.

3. Circuit-breaker system according to Claim 1,
characterized by the feature
3.1 the switch drive (SD) is an integral part of an isolating cartridge (EC).

4. Circuit-breaker system according to Claim 3,
characterized by the feature
4.1 the switch drive (SD) is arranged in a stationary manner on the isolating cartridge (EC).

5. Circuit-breaker system according to Claim 1,
characterized by the feature
5.1 in the operating position and/or the isolating position of the circuit-breaker system, the pole module (PM) can be lowered onto the isolating cartridge (EC).

## Revendications

1. Installation (LA) d'interruption d'alimentation à disjoncteur, notamment installation de commutation à moyenne tension isolée par air comportant un disjoncteur à vide disposé dans un tiroir de coupure, le disjoncteur comprenant une unité polaire et un entraînement (SA) de disjoncteur, et la fonction de coupure s'effectuant par déplacement du disjoncteur complet ou encore par rotation de l'unité polaire par rapport à l'entraînement du disjoncteur, ou par un interrupteur de coupure séparé,
**caractérisée** par les caractéristiques suivantes :
1.1 l'unité polaire du disjoncteur est réalisée sous la ferme d'un module (PM) polaire séparé de l'entraînement (SA) de commutation,
1.2 le module (PM) polaire est disposé en pouvant être déplacé par rapport à l'entraînement (SA) du disjoncteur,
1.3 le module (PM) polaire est relié à l'entraînement (SA) du disjoncteur par un module (KM) de transmission de force,
1.4 le module (PM) polaire est équipé de contacts (EK) insérables, qui peuvent être déplacés horizontalement et verticalement en un mouvement linéaire combiné sous l'action du module (KM) de transmission de force et qui, dans la position de service, se trouvent en engagement avec des contacts (FK) fixes correspondants de l'installation (LA) d'interruption d'alimentation.

2. Installation d'interruption d'alimentation suivant la revendication 1, **caractérisée** par la caractéristique suivante :
2.1 le module (KM) de transmission de force est réalisé sous la forme d'une transmission (HG) articulée à leviers, qui transmet au module (PM) polaire le mouvement de rotation de son articulation à leviers sous forme de mouvement linéaire approximativement uniforme.

3. Installation d'interruption d'alimentation suivant la revendication 1, **caractérisée** par la caractéristique suivante :
3.1 l'entraînement (SA) de commutation fait partie intégrante d'une cassette (EC) insérable.

4. Installation d'interruption d'alimentation suivant la revendication 3, **caractérisée** par la caractéristique suivante :
4.1 l'entraînement (SA) du disjoncteur est disposé fixement sur la cassette (EC) insérable.

5. Installation d'interruption d'alimentation suivant la revendication 1, **caractérisée** par la caractéristique suivante :
5.1 le module (PM) polaire peut être abaissé sur la cassette (EC) insérable dans la position de service et/ou dans la position de coupure de l'installation d'interruption d'alimentation.
